# EUROPEAN PATENT SPECIFICATION

(11) **EP 2 403 163 B1**
(45) Date of publication and mention of the grant of the patent: **28.12.2016**
(21) Application number: 10305702.2
(22) Date of filing: 29.06.2010
(51) Int. Cl.: H04B 10/50, H04B 10/516

(54) **Method and system for generation of QAM formats for applications in optical communication**
Verfahren und System zur Erzeugung von QAM-Formaten für Anwendungen in optischer Kommunikation
Procédé et système de génération de formats QAM pour des applications dans la communication optique

(43) Date of publication of application: 04.01.2012
(73) Proprietor: Orange, 75015 Paris (FR)
(72) Inventor: Turkiewicz, Jaroslaw, 89-600 Chojnice (PL)

(56) References cited:
- EP-A1- 1 184 715
- EP-A1- 2 166 681
- WO-A2-2009/012419
- US-A1- 2008 297 270

## Description

The invention relates to a method for generation of advanced modulation formats and a system for generation of advanced modulation formats, which are particularly used in opto-communication systems with high capacities and throughput per second. An example of an advanced modulation format is Quadrature Amplitude Modulation or, in abbreviated form, "QAM".

Methods and systems for generation of QAM formats are currently known (see for example US2008/297270 or EP2 166 681) . These systems comprise electro-optical modulators and are based on an electro-optical effect. This means that electrical signals are used to drive the modulators. Examples of such modulators are monolithic InP 16 QAM modulators and quad-parallel Mach-Zehnder modulators. The maximum bit rate of the former is typically 43 Gbit/s while the bit rate of the latter is typically limited to 50Gbit/s. These modulators consist of one or more photonic integrated circuits ("PICs"), tiny devices that integrate optical and electronic functionality. However, due to material properties, device design and other constructional constraints, the electrical bandwidth of PICs is limited and, as a consequence, so is the bandwidth of known QAM systems.

Moreover, electrical crosstalk can lower the performance of known QAM systems because PICs, due to their small size, are quite prone to electrical interference. Besides, and despite miniaturization efforts, the known QAM systems still take up much space. They further require the input of a lot of energy to drive them.

EP 1076430 A1 and U.S. 2008/0080859 A1, disclose methods and systems in which the optical signal phase in one of the streams is changed in a phase-shifter.

It is an aim of the invention to provide a device for generating QAM formats at a higher bitrate, which suffers less from crosstalk problems, is more compact and operates in a more energy and environmentally friendly way. Or a device which has at least some of the aforementioned properties.

The method for generation of quadrature modulation formats according to the invention comprises the following steps: in two multi-input interfaces each received input optical signal is given a different amplitude, and then they are transmitted to two optical wavelength converters. In a light source a monochromatic non-modulated continuous optical signal having a constant optical power and an output wavelength is generated. This signal is uniformly distributed to the second input of the first optical wavelength converter and to the first input of the second optical wavelength converter.

In the first optical wavelength converter, optical signals from the first multi-input interface are copied concurrently onto the optical signal with the carrier having an output wavelength, and the inphase component is generated, while, in the second optical wavelength converter, optical signals from the second multi-input interface are copied concurrently onto the optical signal with the carrier having an output wavelength, and the quadrature component is generated. Subsequently, in the optical phase-shifter, the phase of the quadrature component is shifted by a Π/2 in the domain of the output wavelength.

The optical signals appearing at the output of the first optical wavelength converter and at the output of the optical phase-shifter are added up in an adder, thus obtaining at the output of the adder, a quadraturely modulated optical signal with the carrier having an output wavelength.

The system for generation of quadrature modulation formats according to the invention comprises the following features: the first multi-input interface includes n optical attenuators whose outputs are connected to the first input of the first optical wavelength converter, and the second multi-input interface includes n optical attenuators whose outputs are connected to the second input of the second optical wavelength converter.

The first output of the light source is connected to the second input of the first optical wavelength converter, and the second output of the light source is connected to the first input of the second optical wavelength converter.

The output of the first optical wavelength converter is connected to the first input of the adder, and the output of the second optical wavelength converter is connected through the optical phase shifter to the second input of the adder. The output of the adder is the output of the system.

Advantageous effects of the method and system for generation of quadrature modulation formats according to the invention, in relation to the present state of the art, consist in the optical-only processing of optical signals, while this optical processing is carried out at higher speeds, with limited energy consumption, and with a limited impact of electronic crosstalks.

The invention also relates to a device for generation of quadrature modulation formats comprising a light source, said light source being arranged, when said device is in operation, to output a light beam which is split in a first part and at least a second part, said device comprising at least one phase shifter for imparting a phase difference of Π/2 modulo Π to said first part with respect to said second part, characterized in that said device comprises a first optical wavelength converter being arranged to receive at least a first optical signal for modulating said first part and at least one second optical wavelength converter being arranged to receive at least a second optical signal for modulating said second part.

Such a device has as advantages that, because the electro-optical modulators are no longer there, it contains less electronics. The major part of the operations is carried out optically, so an important reduction in electrical interference is realized. A further advantage is that the device enables to go to bit rates that are higher than those currently possible.

In an embodiment of the invention, said first optical wavelength converter is arranged to receive at least a third optical signal for modulating said first part.

In another embodiment of the invention, said third optical signal is attenuated before being received by said first optical wavelength converter.

This has as an advantage that it is possible to distinguish the first and third optical signals from each other by tuning their respective amplitude.

In another embodiment of the invention, said second optical wavelength converter is arranged to receive at least a fourth optical signal for modulating said second part.

In another embodiment of the invention, said fourth optical signal is attenuated before being received by said second optical wavelength converter.

In another embodiment of the invention, at least one of said first optical wavelength converter and said second optical wavelength converter is one of a saturable absorber or a semiconductor optical amplifier.

In another embodiment of the invention, said first optical wavelength converter comprises a first output and said second optical wavelength converter comprises a second output and said first output and said second output are fed into an adder.

The invention also relates to an optical transmission system comprising a device as described above.

The invention also relates to a method for generation of quadrature modulation formats comprising the following steps:
- splitting a light beam output by a light source, in a first part and at least a second part,
- imparting by at least one phase shifter a phase difference of Π/2 modulo Π to said first part with respect to said second part, characterized by
- receiving by a first optical wavelength converter at least a first optical signal for modulating said first part and
- receiving by at least a second optical wavelength converter at least a second optical signal for modulating said second part.

The invention also relates to a computer program comprising program code means for performing all the steps described above when said program is run on a computer.

The invention also relates to a computer program product comprising program code means stored on a computer readable medium for performing the method described above when said program product is run on a computer.

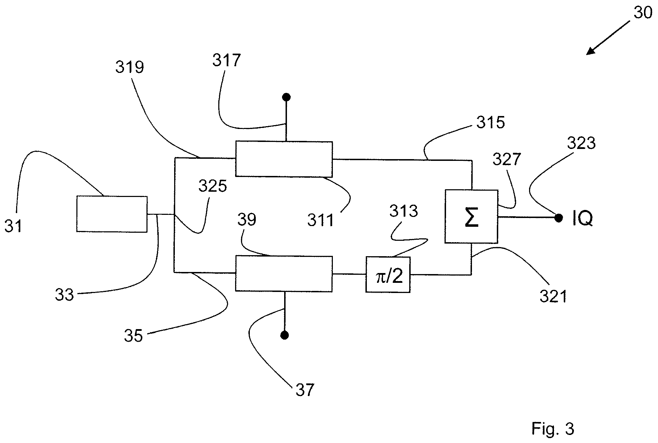

The invention will be explained in further detail, and by way of example, with reference to the accompanying drawings in which
Fig. 3 shows a QAM system as currently known,
Fig. 1 shows a block diagram of a system for generation of quadrature modulation formats, and
Fig. 2 is a visualization of optical signal runs at the first input of the first optical wavelength converter, at the second input of the second optical wavelength converter and in two branches and at the output of the system for generation of quadrature modulation formats.

Figure 3 shows a QAM system 30 known in the prior art. Such a system 30 typically comprises a light source 31 connected to the input of a beam splitter 325 which further comprises a first output 319 connected to an input of a first electro-optical modulator 311 and a second output 35 of the beam splitter 325 connected to an input of a second electro-optical modulator 39. The first electro-optical modulator 311 comprises a further input 317 to which a first electrical data signal can be connected. On its turn, and in a comparable way, the second electro-optical modulator 39 comprises a further input 37 on which a second electrical data signal can be connected. The output of the second electro-optical modulator 39 is connected to a phase shifter 313. The output of the phase shifter 313 and the output of the first electro-optical modulator 311 are connected to an adder 327.

In operation of the system 30, the light source 31 emits a light beam 33. This light beam 33, also referred to as optical carrier, is split such that some of the light goes into a first branch 315 or I-arm (for "inphase"-arm) and some of the light goes into a second branch 321 or Q-arm (for "quadrature"-arm). A first electrical data signal is fed into the first electro-optical modulator 311 via the further input 317 and a second electrical data signal is fed into the second electro-optical modulator 39 via the further input 37.

Electro-optical modulators, as will be appreciated by a person skilled in the arts, are modulators that have as a property that, using an electro-optical effect, an electrical signal can induce changes in the properties of the material from which the modulator is built, thus inducing changes in (or "modulating") amplitude or phase of light that is fed into the modulator.

Thus, in the system shown in figure 3, the first electrical data signal and the second electrical data signal each modulate individually respectively the light of the optical carrier in the first branch 315 forming a first optical signal and the light of the optical carrier in the second branch 321 forming a second optical signal. The second optical signal passes subsequently through the phase shifter 313, which causes the second optical signal to be delayed of Π/2 the carrier wavelength. Finally the first optical signal and the second optical signal are summed up in the adder 327. In this way, a QAM output signal 323 consisting of two modulated signals, a quadrature and an inphase one, is generated. The QAM output signal 323 generated in this way is then transmitted in a transmission system and received at a receiver.

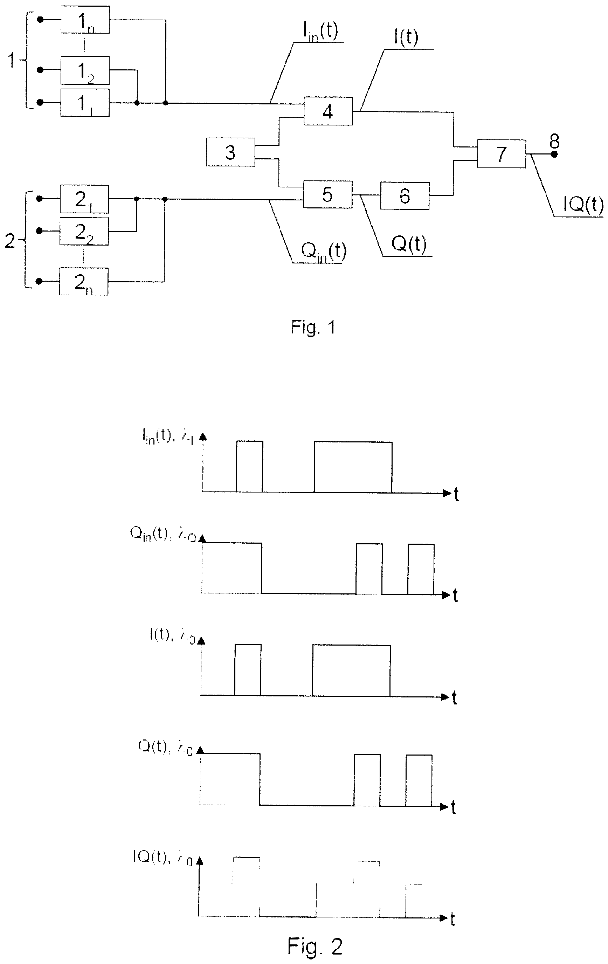

Shown in fig. 1 is an example embodiment of method for generation of advanced quadrature modulation formats, according to the invention. A monochromatic non-modulated continuous optical signal with a constant optical power and an output wavelength λ*_{O}* is generated in a light source 3. This monochromatic non-modulated continuous optical signal with a constant optical power and an output wavelength λ*_{O}* generated in the light source 3 is distributed uniformly to the second input of the first optical wavelength converter 4 and to the first input of the second optical wavelength converter 5. It should however be noted that the invention will work with any coherent light source (such as a laser) or even with a light emitting diode ("LED"). In addition, the light source does not need to emit light in a continuous fashion, for instance a pulsed light source will work as well. Nor need the optical output power of the light source be constant. Also, the distribution of the optical signal to the first and second outputs need not be uniform. A distribution that is non-uniform (for instance a distribution in which 55 % of the output power goes to the second input of the first optical wavelength converter 4 and in which the remaining 45 % goes to the first input of the second optical wavelength converter 5) will work as well.

In the first multi-input interface 1 each received input optical signal is given a different amplitude, and in the second multi-input interface 2 each received input optical signal is given a different amplitude. Such amplitude differentiation provides a clear identification of each received input optical signal. At the output of the first multi-input interface 1 appears an i-th input amplitude modulated optical signal Iᵢ(t) with a carrier having a wavelength λ*_{I}*, while at the output of the second multi-input interface 2 appears an i-th input amplitude modulated optical signal Qᵢ(t) with a carrier having a wavelength λ*_{Q}*.

Optical signals are transmitted from the output of each optical attenuator 1₁, 1₂, ... , 1ₙ of the first multi-input interface 1, to the first input of the first optical wavelength converter 4, and optical signals are transmitted from the output of each optical attenuator 2₁, 2₂, ... , 2ₙ of the second multi-input interface 2 to the second input of the second optical wavelength converter 5.

In the first optical wavelength converter 4, optical signals Iᵢ(t), where i = 1, 2, ... , n, are copied from the first multi-input interface 1 onto the optical signal with the output carrier having a wavelength λ_{*0*,} and a inphase component I(t) is generated, while in the second optical wavelength converter 5 optical signals Qᵢ(t), where i = 1, 2, ... n, are copied from the second multi-input interface 2 onto the optical signal with the output carrier having a wavelength λ*_{O}*, and a quadrature component Q(t) is generated. Next, in the optical phase-shifter 6 the phase of the quadrature component Q(t) is shifted by Π/2 in the domain of the output wavelength λ*_{O}*.

The optical signals appearing at the output of the first optical wavelength converter 4 and at the output of the optical phase-shifter 6 are summed in the adder 7. At the output of the adder 7, a quadraturely modulated optical signal IQ(t) with the carrier having the output wavelength λ*_{O}* is obtained. The quadrature optical signal generated in this way is transmitted in the opto-telecommunication systems with high throughputs per second.

In the example embodiment of a system for generation of advanced quadrature modulation formats according to the invention, the first multi-input interface 1 includes n optical attenuators 1₁, 1₂, ..., 1ₙ and the second multi-input interface 2 includes n optical attenuators 2₁, 2₂, ..., 2ₙ. The outputs of the optical attenuators 1₁, 1₂, ... , 1ₙ of the first multi-input interface 1 are connected to the first input of the first optical wavelength converter 4, and the output of the optical attenuators 2₁, 2₂, ..., 2ₙ of the second multi-input interface 2 are connected to the second input of the second optical wavelength converter 5.

The output of the first optical wavelength converter 4 is connected to the first input of the adder 7, and the output of the second optical wavelength converter 5 is connected through the optical phase-shifter 6 to the second input of the adder 7. The first output of the light source 3 is connected to the second input of the first optical wavelength converter 4, while its second output is connected to the first input of the second optical wavelength converter 5. The output of the adder 7 is the output of the system 8.

Fig. 2 shows the signals as can be measured at several points indicated in the system shown in fig. 1. It should be noted that the scale of the graph at the bottom of fig. 2 is different from that of the other graphs shown in fig. 2. IQ(t) is the sum of I(t) and Q(t).

Saturable absorbers or semiconductor optical amplifiers can be used as optical wavelength converters. These are optical components showing a non linear behavior of the absorption as a function of the optical input power.

Method and system for the generation of advanced quadrature modulation formats according to the invention is suitable for use in opto-telecommunication systems for the simultaneous transmission of optical signals having different wavelengths, with high throughputs per second.

It should for example be noted that the system shown in fig. 1 can be scaled up to generate so called higher order QAM formats such as 16 QAM. In such a case further optical wavelength converters each connected to a further phase shifter would be needed to receive further optical signals to modulate the light beam from the light source 3. These optical wavelength converters and their respective phase shifters would need to be connected in parallel with the second optical wavelength converter 5 and the optical phase-shifter 6.

## Claims

1. Method for generation of quadrature modulation formats, comprising the steps of :
- feeding at least a first and a second input modulated optical signals respectively to a first multi-input interface (1) and a second multi-input interface (2),
wherein a different amplitude is given respectively to the first input modulated optical signal and to the second input modulated optical signal by,
- then, transmitting the first and the second input modulated optical signals respectively to a first input of a first optical wavelength converter (4) and a first input of a second optical wavelength converter (5),
- distributing a monochromatic non-modulated continuous optical signal having an output wavelength (λ*_{O}*) generated in a light source (3) to a second input of the first optical wavelength converter (4) and to a second input of the second optical wavelength converter (5),
- in the first optical wavelength converter (4), copying the first input modulated optical signal into the continuous optical signal, generating an inphase component (I(t)),
- in the second optical wavelength converter (5), copying the second input modulated optical signal is onto the continuous optical signal, generating a quadrature component (Q(t)),
- in a optical phase-shifter (6), shifting the phase of the quadrature component (Q(t)), by Π/2 in the domain of the output wavelength (λ*_{O}*) of the continuous optical signal,
- summing in an adder (7) the inphase component (I(t)), and the quadrature component (Q(t)), generating a quadraturely modulated optical signal (IQ(t)).

2. Device for generation of quadrature modulation formats comprising :
- a first and a second multi-input interfaces (1, 2), an output of the first multi-input interface (1) being connected to a first input of a first optical wavelength converter (4), and an output of the second multi-input interface (2) being connected to a first input of the second optical wavelength converter (5),
- a light source (3) comprising a first output connected to a second input of the first optical wavelength converter (4) and a second output connected to a second input of the second optical wavelength converter (5),
and output of the first optical wavelength converter (4) being connected to a first input of an adder (7)and an output of the second optical wavelength converter (5) being connected through an optical phase-shifter (6) to a second input of the adder (7).

3. Device according to claim 2 wherein the first and the second multi-input interfaces (1, 2) include respectively n optical attenuators (1₁, 1₂, ..., 1ₙ) whose outputs are connected to the first input of the first optical wavelength converter (4), and n optical attenuators (2₁, 2₂, ..., 2ₙ) whose outputs are connected to the first input of the second optical wavelength converter (5).

4. Device according to any of the claims 1 to 3 wherein at least one of said first optical wavelength converter (4) and said second optical wavelength converter (5) is one of a saturable absorber or a semiconductor optical amplifier.

5. Optical transmission system comprising a device according to any of the claims 1 to 4.

6. A computer program comprising program code means for performing all the steps of claim 1 when said program is run on a computer.

7. A computer program product comprising program code means stored on a computer readable medium for performing the method according to claim 1 when said program product is run on a computer.

## Patentansprüche

1. Verfahren zum Erzeugen von Quadraturmodulationsformaten, das die folgenden Schritte umfasst:
- Zuführen wenigstens eines ersten und zweiten modulierten optischen Eingangssignals jeweils zu einer ersten Mehrfacheingang-Schnittstelle (1) und einer zweiten Mehrfacheingang-Schnittstelle (2),
wobei dem ersten modulierten optischen Eingangssignal und dem zweiten modulierten optischen Eingangssignal jeweils eine unterschiedliche Amplitude gegeben wird, durch:
- anschließend Übertragen des ersten und zweiten modulierten optischen Eingangssignals jeweils an einen ersten Eingang eines ersten optischen Wellenlängenumwandlers (4) und einen ersten Eingang eines zweiten optischen Wellenlängenumwandlers (5),
- Verteilen eines monochromatischen nichtmodulierten kontinuierlichen optischen Signals mit einer Ausgangswellenlänge (λ₀), das in einer Lichtquelle (3) erzeugt wird, auf einen zweiten Eingang des ersten optischen Wellenlängenumwandlers (4) und einen zweiten Eingang des zweiten optischen Wellenlängenumwandlers (5),
- Kopieren des ersten modulierten optischen Eingangssignals in das kontinuierliche optische Signal in dem ersten optischen Wellenlängenumwandler (4), wodurch eine gleichphasige Komponente (I(t)) erzeugt wird,
- Kopieren des zweiten modulierten optischen Eingangssignals auf das kontinuierliche optische Signal in dem zweiten optischen Wellenlängenumwandler (5), wodurch eine Quadraturkomponente (Q(t)) erzeugt wird,
- Verschieben der Phase der Quadraturkomponente (Q(t)) in dem Ausgangswellenlängenbereich (λ₀) des kontinuierlichen optischen Signals um n/2 in einem optischen Phasenschieber (6),
- Addieren der gleichphasigen Komponente (I(t)) und der Quadraturkomponente (Q(t)) in einem Addierer (7), wodurch ein quadraturmoduliertes optisches Signal (IQ(t)) erzeugt wird.

2. Vorrichtung zum Erzeugen von Quadraturmodulationsformaten, die Folgendes umfasst:
- eine erste und zweite Mehrfacheingang-Schnittstelle (1, 2), einen Ausgang der ersten Mehrfacheingang-Schnittstelle (1), der mit einem ersten Eingang eines ersten optischen Wellenlängenumwandlers (4) verbunden ist, und einen Ausgang der zweiten Mehrfacheingang-Schnittstelle (2), der mit einem ersten Eingang des zweiten optischen Wellenlängenumwandlers (5) verbunden ist,
- eine Lichtquelle (3), die einen ersten Ausgang, der mit einem zweiten Eingang des ersten optischen Wellenlängenumwandlers (4) verbunden ist, und einen zweiten Ausgang, der mit einem zweiten Eingang des zweiten optischen Wellenlängenumwandlers (5) verbunden ist, umfasst,
und einen Ausgang des ersten optischen Wellenlängenumwandlers (4), der mit einem ersten Eingang eines Addierers (7) verbunden ist, und einen Ausgang des zweiten optischen Wellenlängenumwandlers (5), der durch einen optischen Phasenschieber (6) mit einem zweiten Eingang des Addierers (7) verbunden ist.

3. Vorrichtung nach Anspruch 2, wobei die erste und die zweite Mehrfacheingang-Schnittstelle (1, 2) jeweils n optische Abschwächer (1₁, 1₂, ..., 1ₙ) , deren Ausgänge mit dem ersten Eingang des ersten optischen Wellenlängenumwandlers (4) verbunden sind, und n optische Abschwächer (2₁, 2₂, ...,2ₙ), deren Ausgänge mit dem ersten Eingang des zweiten optischen Wellenlängenumwandlers (5) verbunden sind, beinhalten.

4. Vorrichtung nach einem der Ansprüche 1 bis 3, wobei wenigstens einer von dem ersten optischen Wellenlängenumwandler (4) und dem zweiten optischen Wellenlängenumwandler (5) ein sättigbarer Absorber oder ein optischer Halbleiterverstärker ist.

5. Optisches Übertragungssystem, das eine Vorrichtung nach einem der Ansprüche 1 bis 4 umfasst.

6. Computerprogramm, das ein Programmcodemittel zum Durchführen aller Schritte aus Anspruch 1 umfasst, wenn das Programm auf einem Computer ausgeführt wird.

7. Computerprogrammprodukt, das ein Programmcodemittel, das auf einem computerlesbaren Medium gespeichert ist, zum Durchführen des Verfahrens nach Anspruch 1 umfasst, wenn das Programmprodukt auf einem Computer ausgeführt wird.

## Revendications

1. Procédé de génération de formats de modulation en quadrature, comprenant les étapes de :
- fournir au moins un premier et un second signal optique modulés d'entrée respectivement à une première interface multi-entrées (1) et à une seconde interface multi-entrées (2),
dans lequel une amplitude différente est attribuée respectivement au premier signal optique modulé d'entrée et au second signal optique modulé d'entrée par les étapes consistant à,
- transmettre ensuite le premier et le second signal optique modulés d'entrée respectivement à une première entrée d'un premier convertisseur de longueur d'onde optique (4) et à une première entrée d'un second convertisseur de longueur d'onde optique (5),
- distribuer un signal optique continu non modulé monochromatique ayant une longueur d'onde de sortie (λ₀ générée dans une source de lumière (3) à une seconde entrée du premier convertisseur de longueur d'onde optique (4) et à une seconde entrée du second convertisseur de longueur d'onde optique (5),
- dans le premier convertisseur de longueur d'onde optique (4), copier le premier signal optique modulé d'entrée dans le signal optique continu de sorte à générer une composante en phase (I(t)),
- dans le second convertisseur de longueur d'onde optique (5), copier le second signal optique modulé en entrée sur le signal optique continu de sorte à générer une composante en quadrature (Q(t)),
- dans un déphaseur optique (6), déphaser la composante en quadrature (Q(t)) de n/2 dans le domaine de la longueur d'onde de sortie (λ₀) du signal optique continu,
- sommer dans un additionneur (7) la composante en phase (I(t)) et la composante en quadrature (Q(t)), de sorte à générer un signal optique modulé en quadrature (IQ(t)).

2. Dispositif de génération de formats de modulation en quadrature comprenant :
- une première et une seconde interface multi-entrées (1, 2), une sortie de la première interface multi-entrées (1) étant connectée à une première entrée d'un premier convertisseur de longueur d'onde optique (4), et une sortie de la seconde interface multi-entrées (2) étant connectée à une première entrée d'un second convertisseur de longueur d'onde optique (5),
- une source de lumière (3) comprenant une première sortie connectée à une seconde entrée du premier convertisseur de longueur d'onde optique (4) et une seconde sortie connectée à une seconde entrée du second convertisseur de longueur d'onde optique (5),
et une sortie du premier convertisseur de longueur d'onde optique (4) étant connectée à une première entrée d'un additionneur (7) et une sortie du second convertisseur de longueur d'onde optique (5) étant connectée par l'intermédiaire d'un déphaseur optique (6) à une seconde entrée de l'additionneur (7).

3. Dispositif selon la revendication 2, dans lequel la première et la seconde interface multi-entrées (1, 2) incluent respectivement n atténuateurs optiques (1₁, 1₂, ..., 1ₙ) dont les sorties sont connectées à la première entrée du premier convertisseur de longueur d'onde optique (4), et n atténuateurs optiques (2₁, 2₂, ..., 2ₙ) dont les sorties sont connectées à la première entrée du second convertisseur de longueur d'onde optique (5).

4. Dispositif selon l'une quelconque des revendications 1 à 3, dans lequel au moins l'un dudit premier convertisseur de longueur d'onde optique (4) et dudit second convertisseur de longueur d'onde optique (5) est l'un d'un absorbeur saturable ou d'un amplificateur optique à semi-conducteur.

5. Système de transmission optique comprenant un dispositif selon l'une quelconque des revendications 1 à 4.

6. Programme d'ordinateur comprenant des moyens de code de programme permettant de réaliser toutes les étapes de la revendication 1 lorsque ledit programme est exécuté sur un ordinateur.

7. Produit de programme d'ordinateur comprenant des moyens de code de programme stocké sur un support lisible par ordinateur permettant de réaliser le procédé selon la revendication 1 lorsque ledit produit de programme est exécuté sur un ordinateur.
